# EUROPÄISCHE PATENTSCHRIFT

(11) **EP 3 091 059 B1**
(45) Veröffentlichungstag und Bekanntmachung des Hinweises auf die Patenterteilung: **09.09.2020**
(21) Anmeldenummer: 16166493.3
(22) Anmeldetag: 21.04.2016
(51) Int. Cl.: C09J 7/20

(54) **KLEBEBAND MIT KLEBEMASSE MIT KONTINUIERLICHER POLYMERPHASE**
ADHESIVE TAPE WITH ADHESIVE MASS WITH CONTINUOUS POLYMER PHASE
BANDE COLLANTE ET MASSE COLLANTE A PHASE POLYMERE CONTINUE

(30) Priorität: 05.05.2015 DE 102015208314; 17.09.2015 DE 102015217860
(43) Veröffentlichungstag der Anmeldung: 09.11.2016
(73) Patentinhaber: tesa SE, 22848 Norderstedt (DE)
(72) Erfinder: Bai, Minyoung, 22529 Hamburg (DE); Gäbert, Chris, 02627 Weißenburg (DE); Keite-Telgenbüscher, Klaus, 22529 Hamburg (DE); Schuh, Christian, 22767 Hamburg (DE)

(56) Entgegenhaltungen:
- EP-A1- 1 612 251
- EP-A1- 1 819 794
- EP-A1- 2 832 811
- WO-A1-2010/136086
- US-A1- 2015 037 559

## Beschreibung

Die vorliegende Erfindung betrifft ein Klebeband, enthaltend eine Klebemasse enthaltend mindestens ein Polymer und optional mindestens ein Klebharz, mindestens ein Reaktivharzes, wobei die Klebemasse auf 100 Teile Polymer und Klebharz mindestens 104 Teile des mindestens einen Reaktivharzes enthält, mindestens einen Initiator und/oder Härter, die Verwendung eines solchen Klebebandes sowie ein Verfahren zum Herstellen der Klebemasse für ein solches Klebeband.
"Mindestens 104 Teile des mindestens einen Reaktivharzes" ist erfindungsgemäß so zu verstehen, dass entweder das eine (einzige) Reaktivharz 104 Teile oder mehr oder bei mehreren Reaktivharzen die Summe der Anteile der Reaktivharze 104 oder mehr ausmacht.

Zum strukturellen Verkleben von Bauteilen, d.h. zum Verkleben mit sehr hohen (> 10 MPa) Klebkräften, wie beispielweise im Automobilbau werden Flüssigkleber zumeist auf Epoxidbasis verwendet. Diese werden über komplex gesteuerte Dosiermaschinen aufgetragen und verfügen über keine initiale Verklebungsfestigkeit, sodass die Bauteile über den Aushärtungszeitraum in Position gehalten werden müssen. Es gibt einige wenige Systeme, die über in sich haftklebrige Acrylate erhalten werden, jedoch ihre Haftklebrigkeit verlieren, wenn der Epoxidanteil größer 50 Gew.-% wird. Besonders hohe Scherfestigkeiten werden jedoch mit möglichst hohen Epoxidanteilen erzielt. Ein höherer Anteil an Epoxid und somit eine bessere Klebkraft gehen somit immer zu Lasten der Haftklebrigkeit. Wünschenswert sind solche Klebemassen, die die positiven Eigenschaften eines hohen Epoxidanteils und hoher Haftklebrigkeit vereinen. Für eine besonders einfache Applikation sind insbesondere Klebebänder bevorzugt.

Im Stand der Technik sind verschiedene Ansätze erkennbar, einen hohen Epoxidanteil bei gleichzeitiger Haftklebrigkeit zu verwirklichen:
In der DE 10 2004 031 188 A1 werden Klebemassen offenbart, die zumindest aus a) einem säure- oder säureanhydridmodifizierten Vinylaromatenblockcopolymer und b) einer epoxidhaltigen Verbindung bestehen. Durch die chemische Vernetzung der Harze mit den Elastomeren werden sehr große Festigkeiten innerhalb des Klebefilms erreicht. Um die Adhäsion zu erhöhen, ist auch der Zusatz von mit dem Elastomerblock der Blockcopolymere verträglichen Klebharzen möglich. Die säure- beziehungsweise säureanhydridmodifizierten Elastomere und Epoxidharze werden in einem Mengenverhältnis eingesetzt, so dass der molare Anteil an Epoxidgruppen und Anhydridgruppen gerade äquivalent ist. Bei der Verwendung der gängigen, nur gering modifizierten Elastomere und dem Einsatz niedermolekularer Epoxidharze mit einem niedrigen Epoxidäquivalent ergeben sich dabei nur sehr geringe Mengen - von unter 10 Gew.-% bezogen auf das modifizierte Styrolblockcopolymer - an Epoxidharz, die eingesetzt werden. Im Wesentlichen wirkt so das Epoxidharz als Vernetzungsagens für die modifizierten Elastomere.

US 6,294,270 B, US 6,423,367 B und US 6,489,042 B beschreiben vernetzbare Mischungen aus epoxidierten Vinylaromatenblockcopolymeren und Epoxidharzen unter anderem auch als Klebemasse für die Verklebung zweier elektronischer Bauteile. Hauptsächlich ist eine Vernetzung durch Bestrahlung mit UV-Licht beschrieben. Für diesen Zweck hat sich hier ein sehr hoher Anteil von über 90 Gew.-% des epoxidierten Vinylaromatenblockcopolymers als beste Lösung erwiesen. Im Wesentlichen wirkt auch hier das Epoxidharz als Vernetzungsagens für die modifizierten Elastomere. Aus diesen vier vorgenannten Schriften geht hervor, dass es sich jeweils um einen homogenen Blend von Reaktivharz und modifiziertem Blockcopolymer handeln muss, der sich durch eine gute Verträglichkeit dieser zumindest zwei Komponenten auszeichnet, so dass das Epoxidharz auch nach der Vernetzung molekular dispergiert in der Elastomerphase vorliegt. Da das Epoxidharz als Vernetzungsagens wirkt, kann es zu keiner Ausbildung von vernetzten Epoxidphasen kommen. In ihrer Funktion als Vernetzungsagentien werden Epoxide mit maximal 10% in Haftklebesystemen eingesetzt.

In der DE 10 2011 105 209 A1 wird ein haftklebriges Klebeband für strukturelle Verklebungen beschrieben. Im dort beschriebenen Stand der Technik wird explizit darauf hingewiesen, dass kein haftklebriges System bekannt ist, welches unter Einwirkung von hoher Temperatur eine falten- und blasenfreie strukturelle Verklebung ermöglicht. Vor allen Dingen wird darauf hingewiesen, dass aus lösungsmittelbasierten Haftklebstoffen keine blasen- und kanalfreien Produkte entstanden. Gelöst wurde das Problem über ein reaktives Dickschichtpolymerisat, welches neben radikalisch polymerisierbaren Acrylaten auch 5-15% festes Bisphenol-A Epoxid enthält und mittels UV-Licht soweit vernetzt wird, dass ein leicht haftklebriges Band erhalten wird.

Hieraus ergibt sich, dass für haftklebrige Systeme in sich haftklebrige Elastomere auf Acrylatbasis benötigt werden und dass diese mit bis zu 15% Epoxid vernetzt werden können.

In der EP 1 028 151 B1 ist ein Epoxidhaftkleber auf Acrylatbasis beschrieben, der über Maleinsäureanhydrid-Copolyacrylate einerseits haftklebrig gestaltet wird, wobei sich andererseits der Epoxidanteil überraschenderweise auf bis zu 50% steigern lässt. Dabei wird dargelegt, dass die Scherfestigkeit nach Aushärtung mit der Menge an Epoxid steigt, jedoch die Haftklebrigkeit verloren geht. Durch die Verwendung von Maleinsäureanhydrid-Copolyacrylaten als Klebharz können allerdings Epoxidanteile von bis zu 50 Gew.-% erreicht werden, wobei bevorzugt aber 20 bis 40 Gew.-% eingesetzt werden, in den Beispielen werden maximal 25 Gew.-% eingesetzt.

In der EP 0 386 909 A1 wird ein durch UV-Strahlung herstellbares Prepolymerisat auf Copolyacrylatbasis beschrieben, das mit einem latenten Härter und einem phenolischen Epoxidharz gemischt wird und nach Beschichtung auf einem bahnförmigen Trägermaterial durch UV-Strahlung weiterpolymerisiert wird. Der Haftklebstoff ist thermisch nachvernetzbar, wobei die in der Copolyacrylatmatrix vorhandenen Epoxidharz- und Härteranteile miteinander reagieren. Auch werden wieder Acrylate benötigt, um haftklebrige thermisch nachhärtbare Epoxidklebebänder herzustellen. Beansprucht werden dabei zwar bis zu 60 Gew.-% Epoxidharz, in den erfindungsgemäßen Beispielen werden jedoch nur < 51 Gew.-% realisiert.

Darüber hinaus ist es aus dem J. Appl. Polym. Sci. 41, 467, 1990 - "Rubber-Modified Epoxides" bekannt, Epoxidharzklebstoffen Elastomere zuzusetzen. Ein gängiges Verfahren zur Erzeugung zweiphasiger Morphologien zum Beispiel in Epoxidharzklebstoffen ist der Zusatz eines endgruppenmodifizierten, epoxidreaktiven Polybutadien-Co-Acrylnitril-Copolymers zum ungehärteten Epoxidharz. Dabei muss das thermoplastische Polymer im ungehärteten Epoxidharz löslich werden, im Verlauf der Härtungsreaktion jedoch mit dem Epoxidharz-Polymer unverträglich sein, so dass es während der Härtung zur Phasenseparation kommt. Mit Erreichen des Gelpunktes wird der Phasenseparationsprozess gestoppt, so dass das thermoplastische beziehungsweise elastomere Polymer in Form von mikroskopischen sphärischen Domänen in der Epoxidharzmatrix vorliegt. Bei dem Zusatz von Elastomeren zu einem Epoxidharz kommt es also zur Ausbildung einer dispersen Elastomerphase in der Epoxidmatrix.

In der EP 0 927 737 A1 wird die Zugabe von hochschmelzenden Elastomerpartikeln (zum Beispiel Nylon) und carboxyterminiertem Nitrilkautschuk in Epoxidklebstoffe beschrieben. Es wird gezeigt, dass diese auch im ausgehärteten Tape als phasenseparierte Partikel von ∼3µm Größe in der Epoxidmatrix vorliegen. Danach ist die Zugabe von Elastomerenpartikeln und Nitrilkautschuk vorteilhaft, wenn diese nach dem Härten als disperse Phase vorliegen. Ferner erzeugen feste Bisphenol A Epoxide niedrigere Vernetzungsdichten als ihre flüssigen Derivate. Solche sogenannten "Prepregs" ("preimpregnated fibres") sind auch "self-adhesive" und "tacky", aber per Definition bestehen solche Prepregs aus in Epoxid getränkten Geweben, die dem Epoxidharz eine gewisse Kohäsion geben.

Weiterhin bekannt sind mit Flüssigharz imprägnierte Flächengebilde, wie zum Beispiel Prepregs, zur Herstellung von Leiterplatten oder Bauteilen aus Faserverbundkunststoffen. Es handelt sich dabei um textile Flächengebilde, die mit einem Reaktivharz imprägniert sind. Zur Herstellung der Lager- und Transportfähigkeit werden die Reaktivharze in der Regel angeliert, d.h. die Härtungsreaktion wird initiiert und in einem frühen Stadium gestoppt (sog. B-Zustand). Dabei tritt eine deutliche Viskositätserhöhung des Harzes auf, was das imprägnierte Gebilde handhabbar macht. Prepregs dieser Art sind haftklebrig und können somit bei Raumtemperatur zusammenlaminiert werden. Wie Klebebänder werden sie in der Regel mit Release-Linern eingedeckt, um sie stapelbar oder aufwickelbar zu gestalten. Nachteilig an diesem Stand der Technik ist, dass die angelierten Prepregs gekühlt gelagert werden müssen, um ein Weiterlaufen der Härtungsreaktion zu verhindern. Die Viskositätserhöhung vermindert zudem die Benetzungsfähigkeit der Substratoberfläche bei einer Verklebung. In der JP 1991282820A sowie in der US 4,859,533 sind mit Polyurethan bzw. Polyvinylformal schlagzähmodifizierte Prepregs beschrieben.

Polyurethane werden in Epoxidmischungen im Übrigen eingesetzt, um eine möglichst geringe Haftklebrigkeit zu erzielen. Dies ist zum Beispiel in der DE 10 2008 053 520 A1 beschrieben. Auch die in der WO 2009 09814 A1 beschriebene Zusammensetzung aus vernetztem Polyurethan mit maximal 50 Gew.-% Epoxid führt zu einer nicht haftklebrigen Klebemasse.

Die WO 2010 136086 A zeigt thermisch härtbare Klebmassen, umfassend Elastomere, die auch als thermoplastisches Polyurethan gewählt sein können, weiter umfassend mindestens ein reaktives Epoxid-Präpolymer und mindestens einen latenten Härter. Offenbart werden allerdings keine teilkristallinen Polyurethane mit einer vorgegebenen Mindestschmelzenthalpie.

Zusammenfassend werden im Stand der Technik für strukturelle Verklebungen somit nahezu ausschließlich flüssige Epoxid- oder Urethanklebstoffe eingesetzt. Diese werden meist mit Schlagzähmodifikatoren bestehend aus Elastomeren und/oder Thermoplasten abgemischt, sodass sich eine disperse Elastomer/Thermoplast-Phase bildet. Diese Systeme sind nicht haftklebrig.

Abgesehen von Prepregs, in denen die Gewebe dem Epoxidharz eine gewisse Kohäsion verleihen, sind haftklebrige Systeme für strukturelle Verklebungen bisher nur auf Basis von Acrylaten mit Epoxiden beschrieben. Die Acrylate enthalten meist Epoxidfunktionalitäten, sodass im Aushärtungsschritt das Acrylat über die Epoxidvernetzer gehärtet wird. Die Scherfestigkeit steigt mit dem Epoxidanteil, wodurch aber umgekehrt die Haftklebrigkeit nachlässt. Eine Bedingung für das Auftreten von Haftklebrigkeit ist eine gewisse Kohäsion. Diese wird über die haftklebrigen Acrylate bereitgestellt und geht ab bestimmten Mengen an flüssigem Epoxid stark zurück. Einen zentralen Nachteil im aktuellen Stand der Technik stellt der niedrige Epoxidgehalt dar, wodurch die zu erreichenden Scherfestigkeiten eingeschränkt werden.

Aufgabe der vorliegenden Erfindung war es daher, ein haftklebriges Klebeband bereitzustellen, das nach Verklebung zu einem strukturellen Kleber ausgehärtet werden kann und im Vergleich zum Stand der Technik deutlich höhere Scherfestigkeiten nach der Aushärtung aufzeigt.

Diese Aufgabe wird erfindungsgemäß mit einem Klebeband gelöst, enthaltend
- mindestens ein Polymer
- optional ein Klebharz
- mindestens ein Reaktivharz, wobei die Klebemasse auf 100 Teile Polymer und Klebharz mindestens 104 Teile des mindestens einen Reaktivharzes enthält
- mindestens einen Initiator und/oder Härter und/oder Beschleuniger
   dadurch gekennzeichnet, dass
   die Klebemasse eine Haftklebemasse ist, wobei das mindestens eine Polymer im ungehärteten Zustand der Haftklebemasse als kontinuierliche Polymerphase vorliegt das Reaktivharz in der Polymerphase als gelöst und/oder dispergiert ist,
- das Reaktivharz ein Epoxidharz ist, wobei es ein Feststoff mit einer Erweichungstemperatur von mindestens 45 °C ist oder eine Viskosität bei 25 °C von mindestens 20 Pa s, bevorzugt 50 Pa s, insbesondere mindestens 150 Pa s aufweist,
- und wobei das mindestens eine Polymer ein Thermoplast ist, ausgewählt ist aus der Gruppe der Polyurethane, dadurch gekennzeichnet, dass das Polyurethan teilkristallin ist und in der DSC-Messung einen Schmelz- oder Kristallisationspeak aufweist, der einer Schmelzenthalpie von mindestens 25 J/g entspricht.

Unter "ungehärtetem Zustand" wird dabei der Zustand vor Initiieren der Vernetzungsreaktion des Reaktivharzes verstanden.
Alle angegebenen Werte beziehen sich auf die im Weiteren jeweils offenbarten Messmethoden.

Als Haftklebemassen werden dabei Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit entsprechender Klebemassen beruht auf ihren adhäsiven Eigenschaften und die Wiederablösbarkeit auf ihren kohäsiven Eigenschaften.

"Kontinuierliche Polymerphase" bedeutet, dass das Polymer als kontinuierliche Phase vorliegt, in der das Reaktivharz gelöst und/oder dispergiert ist.

Es wurde festgestellt, dass sich auf diese Weise Haftklebstoffe mit bis zu 85 Gew-.% Reaktivharzanteil realisieren lassen. Die Haftklebrigkeit wird dadurch generiert, dass die Polymere überraschenderweise trotz der hohen Epoxidanteile eine kontinuierliche Phase ausbilden, die für die für die Haftklebrigkeit benötigte Kohäsion sorgt.

Vorzugsweise liegen die Reaktivharze im ungehärteten Zustand zumindest zum Teil homogen gelöst in der kontinuierlichen Phase vor. Auf diese Weise entsteht ein haftklebriges System. In einer besonders vorteilhaften Ausführungsform liegt das Reaktivharz vollständig homogen im Polymer gelöst vor, sodass sich im ausgehärteten Zustand eine kontinuierliche Epoxidphase ausbildet, die den flüssigen Epoxidklebern vergleichbare Scherfestigkeiten erzielt.

"Homogen gelöst" bedeutet dabei, dass im Rasterelektronenmikroskop keine unterschiedlichen Phasen zwischen gelöstem Stoff und lösendem Stoff erkennbar sind.

Besonders bevorzugt enthält die Klebemasse auf 100 Teile Polymer und ggf. Klebharz mindestens 120 Teile Reaktivharz, bevorzugt mindestens 200 Teile Reaktivharz, insbesondere mindestens 300 Teile Reaktivharz. "Teil" bezieht sich dabei auf Gewichtsteile. Die Formulierung "auf 100 Teile Polymer mindestens 120 Teile Reaktivharz" bedeutet, dass auf 100 g Polymer mindestens 120 g eingesetzt werden. Sofern auch Klebharz enthalten ist, werden die Teile an Polymer und Klebharz zusammengefasst. Dabei beziehen sich die Angaben, sofern mehr als ein Reaktivharz eingesetzt wird, auf die Summe der Gewichtsteile der Reaktivharze, sofern mehr als ein Polymer eingesetzt wird, auf die Summe der Gewichtsteile der eingesetzten Polymere, ggf. zuzüglich der Menge des Klebharzes oder der Summe der Gewichtsteile der eingesetzten Klebharze.

Als Reaktivharz kommt erfindungsgemäß ein Epoxidharz zum Einsatz. Mit Epoxidharzen lassen sich Klebstoffe von besonders hoher Scherfestigkeit herstellen. Außerdem sind die Vernetzungsreaktionen gut initiier- und handhabbar. In ungehärtetem Zustand sind die unter Verwendung von Epoxidharzen hergestellten Klebemassen ausreichend lagerstabil. Dabei ist als Reaktivharz mindestens ein Epoxidharz auf Basis von Bisphenol-A, Bisphenol-S, Bisphenol-F, einem Epoxy-Novolak, einem Epoxy-Kresol-Novolak oder einem epoxidierten Nitrilkautschuk besonders bevorzugt.

Das Polymer kann ein Polymer sein, aber auch eine Mischung von zwei oder mehr verschiedenen Polymeren sein. Dabei ist das mindestens eine Polymer wie vorstehend definiert ein Thermoplast, ausgewählt aus der Gruppe der teilkristallinen Polyurethane, die in der DSC-Messung einen Schmelz- oder Kristallisationspeak aufweisen, der einer Schmelzenthalpie von mindestens 25 J/g entspricht.

Um Haftklebemassen mit besonders hohen Epoxidgehalten zu erhalten, eignen sich besonders Polymere, die nicht intrinsisch haftklebrig sind also nicht das Dahlquist Kriterium bei Raumtemperatur erfüllen (vgl. J. Adhesion, 1991, Vol. 34, pp. 189-200 oder C. A. Dahlquist: Tack, adhesion, fundamentals and pra.ctice, McLaren and Sons Ltd., London, 1966). Dies gilt sowohl für die Polymerkomponente wie auch die Mischung aus Polymer und Klebharz, so ein solches zum Einsatz kommt. Obwohl also Polymer und ggf. Klebharz per se nicht haftklebrig sind, ist die resultierende Klebemasse der erfindungsgemäßen Klebebänder haftklebrig.

Die Polymere der Polymermischung können von linearer, verzweigter, sternförmiger oder gepfropfter Struktur sein, um nur einige Beispiele zu geben, und als Homopolymer, als statistisches Copolymer, als alternierendes oder als Blockcopolymere aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

In einer besonders bevorzugten Ausführungsform wird das Polymer der Klebemasse des erfindungsgemäßen Klebebandes nach der Beschichtung und vor der Verwendung chemisch vernetzt. Dies verbessert die klebtechnischen Eigenschaften im unausgehärteten Zustand. Besonders deutlich wird dies unter Scherbelastung bei gleichzeitiger Temperaturerhöhung im sogenannten SAFT-Test (engl. shear adhesion failure temperature). Je kohäsiver die Klebemasse ist, desto kleiner ist der Scherweg. Zur Charakterisierung von Klebemassen ist die sogenannte Kurzzeittemperaturbeständigkeit (KZTB) definiert als die Temperatur, an der der Scherweg 1000 µm erreicht.
Besonders geeignet sind erfindungsgemäß solche Klebebänder, bei denen die Kurzzeittemperaturbeständigkeit des unausgehärteten Klebebandes größer als 35 °C, bevorzugt 45 °C, insbesondere größer 50 °C ist.

Dabei erfolgt die chemische Vernetzung des Polymers vorzugsweise strahleninduziert oder über die Zugabe eines Vernetzungsagens, wobei das Vernetzungsagens insbesondere mindestens 2 reaktive Gruppen, ausgewählt aus der Gruppe bestehend aus Isocyanaten, Alkoxysilanen und Alkylhalogeniden enthält, optional unter Zugabe eines multifunktionellen (d.h. f > 1) Alkohols oder Amins mit einer Molmasse M < 10.000 g/mol. Dabei bezeichnet die Funktionalität f die durchschnittliche Anzahl funktioneller Gruppen pro Molekül.

Für die vorliegende Erfindung können Klebharze verwendet werden, jedoch ist für die Klebemassen der vorliegenden Erfindung ein Klebharz entbehrlich. Es wird auch ohne Klebharzzusatz die gewünschte Haftklebrigkeit der Klebemasse erreicht.

Sofern Klebharze zum Einsatz kommen, sind hierfür Klebharze, wie sie dem Fachmann zum Beispiel aus dem Satas bekannt sind, geeignet.

Ein entsprechendes Klebharz kann eine Erweichungstemperatur gemessen mittels Ring&Ball-Methode von größer 25 °C sowie ergänzend zumindest eine Sorte Klebharz mit einer Erweichungstemperatur von kleiner 20 °C aufweisen. Hierüber kann, falls erforderlich, zum einen das klebtechnische Verhalten, zum anderen aber auch das Auffließverhalten auf dem Verklebungsuntergrund feineingestellt werden.

Als Reaktivharze, die auch als vernetzbare Komponenten bezeichnet werden, können im Prinzip alle, dem Fachmann im Bereich der Haftklebemassen oder Reaktivklebstoffe bekannten, in einer Aufbaureaktion vernetzenden Makromoleküle bildenden reaktiven Konstituenten verwendet werden, wie sie zum Beispiel in Gerd Habenicht: Kleben - Grundlagen, Technologien, Anwendungen, 6. Auflage, Springer, 2009, beschrieben sind. Dies sind beispielhaft Epoxide, Polyester, Polyether, Polyurethane, Phenolharz-, Kresol oder Novolak basierte Polymere, Polysulfide oder Acrylpolymere (Acryl, Methacryl).

Der Aufbau und die chemische Beschaffenheit der vernetzbaren Komponente sind nicht kritisch, solange die Aufbaureaktion unter Bedingungen, insbesondere hinsichtlich der angewendeten Temperaturen, Art der verwendeten Katalysatoren und dergleichen, durchgeführt werden kann, die zu keiner wesentlichen Beeinträchtigung und/oder Zersetzung der Polymerphase führen.

Erfindungsgemäß ist mindestens eins des mindestens einen Reaktivharzes ein Feststoff mit einer Erweichungstemperatur von mindestens 45 °C oder weist eine Viskosität bei 25 °C von mindestens 20 Pa s, bevorzugt 50 Pa s, insbesondere mindestens 150 Pa s auf. Epoxidhaltige Materialien beziehungsweise Epoxidharze, die in den Zusammensetzungen der Erfindung nützlich sind, sind beliebige organische Verbindungen mit wenigstens einem Oxiranring, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclohexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere.Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in US 3,018,262 A beschrieben.

Es gibt eine Vielzahl an im Handel erhältlichen epoxidhaltigen Materialien, die in dieser Erfindung verwendet werden können. Insbesondere umfassen Epoxide, die leicht erhältlich sind, Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexencarboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

Die Klebemasse des erfindungsgemäßen Klebebandes kann darüber hinaus auch einen Beschleuniger enthalten. Dieser bewirkt, dass die Starttemperatur für die Vernetzungsreaktion des Reaktivharzes verringert wird. Damit wird die Handhabung bei der Verklebung verbessert. Dabei ist zu beachten, dass die durch die Zugabe eines Beschleunigers gesenkte Starttemperatur als Nachteil mit einer verringerten Lagerstabilität einhergeht, da die Senkung der Starttemperatur auch eine ungewünschte erhöhte Reaktion während der Lagerung bewirkt. Trotzdem sind die erfindungsgemäßen Klebebänder in ihrer Lagerstabilität den mit Epoxidklebstoffen getränkten Prepregs des Standes der Technik weit überlegen.

Als Beschleuniger können insbesondere modifizierte und unmodifizierte Imidazole, Harnstoffderivate, Säureanhydride, tertiäre Amine, Polyamine und deren Kombination zum Einsatz kommen wie sie beispielsweise von Alzchem (Dyhard-Serie), Huntsman (Aradur-Serie) oder Threebond erhältlich sind.

Die Klebemasse des erfindungsgemäßen Klebebandes enthält mindestens einen Härter oder Initiator.
Härter sind beispielsweise aliphatische Amine, aromatische Amine, modifizierte Amine, Polyamidharze, Säureanhydride, sekundäre Amine, Mercaptane insbesondere Polymercaptane, Polysulfide, Dicyandiamid, organische Säurehydrazide.

Initiatoren zur Initiation einer ringöffnenden Polymerisation von Epoxiden sind beispielsweise Imidazole, Bortrifluorid-Aminkomplexe, tertiäre Amine, amin beziehungsweise ammonium geblockte thermische Säurespender wie Tetrabutylammonium triflat, Ammonium triflat, amin-geblockte Dodecylbenzylsulfonsäure, Lanthanid Triflate wie Ytterbium (III), Samarium (III), Cer (III), Erbium (III), Lanthan (III) und Dysprosium (III) trifluoromethansulfonat

Unter den Initiatoren für eine kationische UV induzierte Härtung sind insbesondere Sulfonium, lodonium und Metallocen basierende Systeme einsetzbar. Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für lodonium-basierende Initiatoren auch Chlorid, Bromid oder lodid als Anionen denkbar, wobei aber Initiatoren, die im Wesentlichen frei von Chlor und Brom sind, bevorzugt sind.

Konkreter zählen zu den einsetzbaren Systemen
- Sulfonium-Salze (siehe zum Beispiel US 4,231,951 A, US 4,256,828 A, US 4,058,401 A, US 4,138,255 A und US 2010/063221 A1) wie Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(pentafluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluorobenzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluorobenzyl)-borat, 5-Methyl-10-oxothianthreniumtetrafluoroborat, 5-Methyl-10-oxothianthreniumtetrakis-(pentafluorobenzyl)-borat und 5-Methyl-10,10-dioxothianthreniumhexafluorophosphat,
- lodonium-Salze (siehe zum Beispiel US 3,729,313 A, US 3,741,769 A, US 4,250,053 A, US 4,394,403 A und US 2010/063221 A1) wie Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat,, (4-n-Desiloxyphenyl)-phenyliodoniumhexafluoroantimonat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolylcumyl)-iodoniumtetrakis-(pentafluorophenyl)-borat,
   und
- Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, Cl-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß einsetzbar sind. Photoinitiatoren werden unkombiniert oder als Kombination von zwei oder mehreren Photoinitiatoren eingesetzt.

Optional kann die Klebemasse weitere Additive, Rheologiemodifizierer, Schäumungsmittel, Füllstoffe oder Adhäsionsvermittler enthalten.
Als weitere Additive können typischerweise genutzt werden:
- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger,
   vorzugsweise mit einem Anteil von 0,2 bis 1Gew.-% bezogen auf das Gesamtgewicht der Haftklebemasse
- Lichtschutzmittel wie zum Beispiel UV-Absorber oder sterisch gehinderte Amine,
   vorzugsweise mit einem Anteil von 0,2 bis 1 Gew.-% bezogen auf das Gesamtgewicht der Haftklebemasse
- Verarbeitungshilfsmittel,
   vorzugsweise mit einem Anteil von 0,2 bis 1 Gew.-% bezogen auf das Gesamtgewicht der Haftklebemasse
- Endblockverstärkerharze,
   vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,
   vorzugsweise mit einem Anteil von 0,2 bis 10 Gew.-% bezogen auf das Gesamtgewicht der Haftklebemasse.

Die erfindungsgemäße Haftklebemasse ist geschäumt. Die Schäumung kann mittels beliebiger chemischer und/oder physikalischer Methoden erfolgen. Bevorzugt wird eine geschäumte erfindungsgemäße Haftklebemasse jedoch durch das Einbringen und nachfolgende Expandieren von Mikroballons erhalten.

Ein erfindungsgemäßes Klebeband ist dann besonders geeignet, wenn die Klebkraft des ungehärteten Klebstoffes auf Stahl mindestens 1 N/cm beträgt. Damit sind gute haftklebrige Eigenschaften gegeben.

Darüber hinaus ist ein erfindungsgemäßes Klebeband dann besonders vorteilhaft, wenn die Verklebungsfestigkeit des ausgehärteten Klebebandes, gemessen mit dynamischem Schertest auf Stahl, mindestens 5 MPa, bevorzugt 10 MPa, insbesondere größer 15 MPa, beträgt. Solche Verklebungsfestigkeiten sorgen für eine sehr stabile und dauerhafte Verbindung zwischen den zu verklebenden Substraten und sind beispielsweise auch für Verklebungen mit hohen Ansprüchen an die Verklebungsfestigkeit in der Automobilindustrie geeignet.

Der allgemeine Ausdruck "Klebeband" umfasst ein Trägermaterial, welches ein- oder beidseitig mit einer (Haft)klebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-) elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar. Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen haftklebrigen trägerlosen Transferklebeband wird eine in Positionierung und Dosierung sehr genaue Verklebung ermöglicht.

Es sind auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Als Trägermaterial eines Klebebandes werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

In einer besonders bevorzugten Ausführungsform ist die Trägerfolie so ausgewählt, dass ihr Schmelzpunkt unterhalb der Härtungstemperatur liegt. Auf diese Weise gibt die Folie im unausgehärteten Zustand zusätzliche Kohäsion, löst sich aber im Vernetzungsschritt zumindest teilweise auf, sodass ein durchgängiges Epoxidnetzwerk aufgebaut wird und somit hohe Verklebungsfestigkeiten erreicht werden.

Die Dicke der Haftklebemasse, die entweder als Transferklebeband oder auf einem flächigen Gebilde beschichtet vorliegt, beträgt bevorzugt zwischen 1 µm und 2000 µm, weiter bevorzugt zwischen 5 µm und 1000 µm und besonders bevorzugt zwischen etwa 50 µm und 550 µm.

Schichtdicken zwischen 300 µm und 700 µm werden zur Überbrückung von Toleranzen zum Beispiel in der Automobilindustrie benötigt.

Eine ergänzende Möglichkeit zur Überbrückung von Toleranzen liegt in der Schäumung des Produktes. Dies kann bereits bei Auslieferung oder bei Applikation geschehen. Dazu können alle dem Fachmann bekannten Schäumungsmittel und -Verfahren verwendet werden.

Schichtdicken zwischen 1 µm und 50 µm reduzieren den Materialeinsatz. Jedoch kommt es zu einer Verringerung der Haftung auf dem Substrat.

Die Erfindung betrifft außerdem die Verwendung des erfindungsgemäßen Klebebandes zum dauerhaften Fügen von zwei Substraten. Aufgrund der großen erreichbaren Verklebungsfestigkeit kann das Klebeband für vielfältige Zwecke verwendet werden. Ein wichtiger Anwendungsbereich ist die Automobilindustrie. Dort werden viele Teile miteinander verklebt, die hohen Belastungen standhalten müssen. Des Weiteren betrifft die vorliegende Erfindung das Verkleben von geölten Substraten. Auch auf solchen Substraten kann das erfindungsgemäße Klebeband angewandt werden und ermöglicht eine stabile Klebung. Geölte Substrate kommen in der Automobilindustrie vielfältig zum Einsatz, da die verwendeten Metallteile aus Gründen des Rostschutzes regelmäßig umfangreich eingeölt werden.

Schließlich betrifft die vorliegende Erfindung ein Verfahren zum Herstellen einer lösemittelbasierten Haftklebemasse, insbesondere für ein erfindungsgemäßes Klebeband, umfassend die Schritte
- Lösen des mindestens einen Polymers in einem geeigneten Lösungsmittel, bevorzugt bei erhöhter Temperatur;
- Zugabe des mindestens einen Reaktivharzes;
- Abkühlen auf Raumtemperatur;
- Zugabe des Härters und optional des Beschleunigers unter starker Scherung, um eine gute Dispergierung zu erreichen;
- Zugabe von optionalen Additiven, Rheologiemodifizierern, Schäumungsmitteln, Füllstoffen, Adhäsionsvermittlern.

Mit einem solchen Verfahren lassen sich lösemittelbasierte Haftklebemassen für die erfindungsgemäßen Klebebänder besonders einfach und zuverlässig herstellen. Die Scherung wird dabei vorzugsweise durch Rühren bewirkt.

Außerdem betrifft die vorliegende Erfindung ein Verfahren zum Herstellen einer lösemittelfreien Haftklebemasse, insbesondere für ein erfindungsgemäßes Klebeband, umfassend die Schritte
- Aufschmelzen des mindestens einen Polymers insbesondere in einem Extruder;
- Zudosierung des mindestens einen Reaktivharzes;
- Abkühlen der Schmelze auf unter 100 °C, insbesondere unter 80 °C ;
- Zudosierung und Einmischen des Härters und optional des Beschleunigers;
- Extrusion dünner Schichten mit einer Stärke von 50 µm bis 3.000 µm, insbesondere mittels Düse oder Kalanderwalzen.

Durch die Verwendung des beschriebenen Temperaturprofils lässt sich die Haftklebemasse lösemittelfrei herstellen. Durch die hohen Temperaturen am Anfang können Polymer und Reaktivharz zunächst vermischt werden. Dann erfolgt eine Temperaturabsenkung und erst im Anschluss die Zugabe des Härters, so dass dieser nicht reagiert, sondern die Masse problemlos extrudiert werden kann. Dieses Verfahren ermöglicht eine besonders hohe Flexibilität in den erreichbaren Schichtdicken. Auch besonders dicke Schichten sind mit diesem Verfahren herstellbar.

### Beispiele

### Messmethoden

### Molekulargewicht:

Die Molekulargewichtsbestimmungen der zahlenmittleren Molekulargewichte Mₙ und der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ Å sowie 10⁵ Å und 10⁶ Å mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

### Schmelzenthalpie:

Die Erweichungstemperatur von Copolymeren, Hart- und Weichblöcken und ungehärteten Reaktivharzen wird kalorimetrisch über die Differential Scanning Calorimetry (DSC) nach DIN 53765:1994-03 bestimmt. Aufheizkurven laufen mit einer Heizrate von 10 K/min. Die Muster werden in Al-Tiegeln mit gelochtem Deckel und Stickstoffatmosphäre vermessen. Es wird die zweite Aufheizkurve ausgewertet. Bei amorphen Stoffen treten Glasübergangstemperaturen auf, bei (semi)kristallinen Stoffen Schmelztemperaturen. Ein Glasübergang ist als Stufe im Thermogramm erkennbar. Die Glasübergangstemperatur wird als Mittelpunkt dieser Stufe ausgewertet. Eine Schmelztemperatur ist als Peak im Thermogramm erkennbar. Als Schmelztemperatur wird diejenige Temperatur notiert, bei der die höchste Wärmetönung auftritt. Aus dem Schmelzpeak wird die Schmelzenthalpie in J/g erhalten.

### Ring & Ball-Erweichungstemperatur:

Die Klebharzerweichungstemperatur wird nach der einschlägigen Methodik ermittelt, die als Ring and Ball bekannt ist und nach ASTM E28 standardisiert ist.

Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt.

Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

### Klebkraft

Die Klebkräfte auf Stahl wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 µm verwendet, wie sie von der Firma Coveme (Italien) erhältlich ist. Die Verklebung des Messtreifens wurde dabei mittels einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen.

### Verklebungsfestigkeit

### Zugscherversuch:

Als Kenngröße für die Qualität der erzielten Verklebung wurde die Verklebungsfestigkeit eines nach dem erfindungsgemäßen Verfahren hergestellten Verbunds für die unterschiedlichen Klebebänder ermittelt. Hierzu wurde die Verklebungsfestigkeit in einem dynamischen Zugscherversuch in Anlehnung an DIN-EN 1465 bei 23 °C und 50 % rF für eine Prüfgeschwindigkeit von 10 mm/min jeweils quantitativ bestimmt (Ergebnisse in N/mm²=MPa). Als Prüfstäbe kamen solche aus Stahl zum Einsatz, welche vor der Verklebung mit Aceton gereinigt wurden. Die Schichtdicken der Klebebänder entsprachen jeweils den obigen Angaben. Angegeben ist der Mittelwert aus drei Messungen.

### Kurzzeittemperaturbeständigkeit (KZTB)

Der SAFT-Test (Shear Adhesion Failure Temperature (SAFT)) dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

### Messprobenpräparation:

Das zu untersuchende Klebeband wird auf eine 50 µm dicke Aluminiumfolie geklebt. Das so präparierte Klebeband wird auf eine Größe von 10 mm x 50 mm geschnitten. Die zugeschnittene Klebebandprobe wird auf eine polierte, mit Aceton gereinigte Stahl-Prüfplatte (Werkstoff 1.4301, DIN EN 10088-2, Oberfläche 2R, Oberflächen-Rauigkeit Ra = 30 bis 60 nm, Abmessungen 50 mm x 13 mm x 1,5 mm) derart verklebt, dass die Verklebungsfläche der Probe Höhe x Breite = 13 mm x 10 mm beträgt und die Stahl-Prüfplatte am oberen Rand um 2 mm überragt. Anschließend mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

### Messung:

Die zu messende Probe wird am unteren Ende mit einem Gewicht von 50 g belastet. Die Stahl-Prüfplatte mit der verklebten Probe wird beginnend bei 30 °C mit einer Rate von 9 °C pro Minute auf die Endtemperatur von 200 °C aufgeheizt. Beobachtet wird der Scherweg der Probe mittels Wegmessfühler in Abhängigkeit von Temperatur und Zeit. Der maximale Scherweg ist auf 2000 µm (2 mm) festgelegt, bei überschreiten wird der Test abgebrochen. Prüfklima: Raumtemperatur 23 ± 3 °C, relative Luftfeuchtigkeit 50 ± 5 %.
Der Messwert (in °C) ergibt sich als Mittelwert aus zwei Einzelmessungen.

Die KZTB ist definiert als die Temperatur, bei der der Scherweg 1000 µm erreicht.

### Viskositätsmessung

Ein Maß für die Fließfähigkeit des fluiden Beschichtungsmaterials ist dynamische Viskosität. Die dynamische Viskosität kann nach DIN 53019 bestimmt werden. Als Fluid wird eine Viskosität von weniger als 10⁸ Pas bezeichnet. Die Viskosität wird in einem Zylinderrotationsviskosimeter mit einer Standardgeometrie nach DIN 53019-1 bei einer Messtemperatur von 23 °C und einer Schergeschwindigkeit 1 x s⁻¹ gemessen.

### Verwendete Rohstoffe:

| | |
|---|---|
| Breon N41H80 | Nitril-Butadien-Kautschuk mit einem Acrylnitrilanteil von 41 Gew.-% von Zeon Chemicals (London, UK) |
| Desmomelt 530 | Weitgehend lineares Hydroxylpolyurethan. Desmomelt 530 ist ein stark kristallisierendes, elastisches Polyurethan sehr geringer Thermoplastizität |
| | der Firma Bayer MaterialScience. Die Schmelzenthalpie gemessen mit DSC beträgt 54,7 J/g. |
| Araldite ECN 1299 | Festes Epoxy-Kresol-Novolak der Firma Huntsman mit einer Erweichungstemperatur (DIN519219) 85 bis 100 °C |
| Polyacrylat 1 | Haftklebriges Acrylatcopolymer aus 2-Hydroxyethylacrylat, 2 Ethylhexylacrylat und C-17-Acrylat, Mₙ = 884000 g / mol |
| Polyurethan 1 | Thermoplastisches Polyurethan auf Basis eines Prepolymers aus Polyadipat von 1,4 Butandiol umgesetzt mit MDI. Die Schmelzenthalpie beträgt 22,4 J/g. |
| Capa 2203A | Thermoplastisches Polycaprolacton Polyol (Mₙ ∼ 2000 g/mol) der Firma Perstorp. |
| Epikote 828 LVEL | Destilliertes Difunktionelles Bisphenol-A / epichlorhydrin Flüssigepoxid mit einem Gewicht pro Epoxid von 185 bis 192 g/eq der Firma Hexion. Viskosität bei 25 °C von 10 bis 12 Pa s. |
| Epon Resin 828 | Difunktionelles Bisphenol-A / epichlorhydrin Flüssigepoxid mit einem Gewicht pro Epoxid von 185 bis 192 g/eq der Firma Momentive. Viskosität bei 25 °C von 12 bis 14 Pa s. |
| PolyDis PD3611 | Nitrilkautschukmodifiziertes Epoxidharz auf der Basis von Bisphenol-F-diglycidylether mit einem Elastomergehalt von 40 Gew.-% und einem Gewicht pro Epoxid von 550 g/eq der Firma Schill + Seilacher "Struktol". Viskosität bei 25 °C von 10000 Pa s. |
| PolyDis PD3691 | Nitrilkautschukmodifiziertes Epoxidharz auf der Basis von Bisphenol-A-diglycidylether mit einem Elastomergehalt von 5 Gew.-% und einem Gewicht pro Epoxid von 205 g/eq der Firma Schill + Seilacher "Struktol". Viskosität bei 25 °C von 300 Pa s. |
| Tactix 556 | Dicyclopentadien-Epoxy-Novolak Harz mit einem Gewicht pro Epoxid von 215 bis 235 g/eq und einem Erweichungspunkt von 53 °C der Firma Huntsman. |
| Dyhard 100S | Latenter Härter der Firma AlzChem für Epoxidsysteme bestehend aus mikronisiertem Dicyandiamid bei dem 98 % der Partikel kleiner 10 µm sind. |
| Dyhard UR500 | Latenter Uronbeschleuniger für Epoxidsysteme bei dem 98 % der Partikel kleiner 10 µm sind. |
| Triarylsulfoniumhexafluoroantimonat | kationischer Fotoinitiator von der Firma Sigma-Aldrich Der Photoinitiator weist ein Absorptionsmaximum im Bereich 320 nm bis 360 nm auf und lag als 50 Gew.-%-ige Lösung in Propylencarbonat vor |

Das **Polyacrylat 1** wurde nach folgender Vorschrift hergestellt:
Ein für radikalische Polymerisationen konventioneller 2 L Glasreaktor wurde mit 40 g 2-Hydroxyethylacrylat, 240 g 2 Ethylhexylacrylat, 120 g C17-Acrylat (dreifach verzweigte Seiten mit C₃-, C₄-Kettensegmenten, BASF SE), 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67 (Firma DuPont) hinzugegeben. Anschließend wurde das äußere Heizbad auf 75 °C erwärmt und die Reaktion konstant bei dieser Außentemperatur durchgeführt. Nach 1 h Reaktionszeit wurden 50 g Toluol hinzugegeben. Nach 2.5 h wurde mit 100 g Aceton verdünnt. Nach 4 h Reaktionszeit wurden nochmals 0,2 g Vazo 67 hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Molekulargewicht Mₙ betrug 884000 g/mol.

Das **Polyurethan 1** wurde nach folgender Vorschrift hergestellt:
Zunächst wurde unter Schutzgas ein Prepolymer aus einem 1,4 Butandiol-Polyadipat (Hoopol F-530, M_{w} = 2450 g/mol) mit 1,25 equivalenten 4,4-diphenyl methandiisocyanat (MDI, Aldrich, 98% 4,4'-Isomer) hergestellt. Die Herstellung des Polyurethans erfolgte ebenfalls unter Stickstoffatmosphäre mit einer stöchiometrischen Menge 1,4 Butandiol unter Rühren für 2h. Die Schmelzenthalpie gemessen mit DSC beträgt 22 J/g.

| **Beispiel:** | **K1** | **K2** | **K3** | **K4** | **K5** | **K6** | **K7** | **K8** | **K9** |
|---|---|---|---|---|---|---|---|---|---|
| **erfindungsgemäß (e) oder Vergleich (V)** | (V) | (V) | (e) | (V) | (e) | (e) | (e) | (e) | (V) |
| | Gew. teile | Gew. teile | Gew. teile | Gew. teile | Gew. teile | Gew. teile | Gew. teile | Gew. teile | Gew. teile |
| Breon N41H80 | 20 | 20 | - | | | | | | |
| Desmomelt 530 | - | - | 20 | | 20 | 14,3 | 20 | 20 | |
| Polyacrylat 1 | | | | 20 | | | | | |
| Polyurethan 1 | | | | | | | | | 20 |
| Capa 2203A | | | | | | 4,8 | | | |
| Epon Resin 828 | 80 | - | - | | | | | | |
| Epikote 828 LVEL | | | | | | | 20 | | |
| Araldite ECN1299 | | | | | | | 60 | | |
| PolyDis PD3611 | - | 65 | - | 65 | 30 | | | | |
| PolyDis PD3691 | - | 15 | - | 15 | 10 | | | | |
| Tactix 556 | - | - | 80 | | 40 | 76,2 | | 80 | 80 |
| Dyhard 100S | 5,56 | 2,49 | 4,62 | 4,87 | 3,51 | 4,4 | | 4,62 | 4,62 |
| Dyhard UR500 | 0,56 | 0,25 | 0,46 | 0,49 | 0,35 | 0,4 | | 0,46 | 0,46 |
| Triarylsulfoniumhexafluoroantimonat | | | | | | | 0,8 | | |
| Desmodur N3300 | | | | | | 4,38 | | | |
| Coscat 83 | | | | | | 0,04 | | | |
| Aerosil R202 | | | | | | | | 7 | |

Die Herstellung der Haftklebemassen erfolgte im Labor durch Lösen des mindestens einen Polymers in Butanon bei 23 °C. Anschließend wurde das/wurden die Reaktivharz(e) zugegeben. Im Anschluss wurde der Härter unter starker Scherung mittels Rühren zugegeben.

Zur Herstellung von Klebemasseschichten wurden die verschiedene Klebemassen aus einer Lösung auf einen konventionellen Liner (silikonisierte Polyesterfolie) mittels eines Laborstreichgeräts aufgebracht und getrocknet. Die Klebemassenschichtdicke nach dem Trocknen beträgt 100 ± 10 µm. Die Trocknung erfolgte jeweils zunächst bei RT für 10 Minuten und 10 Minuten bei 105 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

K1-K6 sind thermisch härtende Klebemassen. Zur Aushärtung wurden die Prüfkörper 30Min. bei 180 °C gehärtet.
K7 ist eine UV-Licht aktivierbare Klebemasse, die unmittelbar vor der Verklebung mit UV-Licht aktiviert wird (Dosis: >80 mJ/cm²; Lampentyp: undotierter Quecksilberstrahler). Zur Beschleunigung der Dunkelreaktion wird die verklebte Probe 1h auf 80 °C erwärmt.
K6 ist ein Beispiel für eine vorvernetzte Klebemasse mit deutlich verbesserten Klebeigenschaften im unausgehärteten Zustand. Die Vorvernetzung erfolgt im Tape über ungefähr 30 Tage bei 23 °C und 50 % rF.

### Messwerte:

| **Beispiel:** | **K1** | **K2** | **K3** | **K4** | **K5** | **K6** | **K7** | **K8** | **K9** |
|---|---|---|---|---|---|---|---|---|---|
| **erfindungsgemäß (e) oder Vergleich (V)** | **(V)** | **(V)** | **(e)** | **(V)** | **(e)** | **(e)** | **(e)** | **(e)** | **(V)** |
| Klebkraft ungehärtet (Stahl) / N cm⁻¹ | 5 | 8 | 20 | 2 | 9,4 | 11,4 | 9 | 13 | 6 |
| Dynamischer Schertest (Stahl-Stahl) / MPa | 13 | 12 | 28 | 18 | 31 | 20 | 7,3 | 26 | 24 |
| Dynamischer Schertest (geölter Stahl - geölter Stahl) / MPa | 11 | 11 | 4 | - | 28 | 2 | - | 3 | 5 |
| KZTB/°C | 30 | 57 | 56 | 38 | 53 | 178 | 43 | 98 | 30 |

| | | | | | | | | | |
|---|---|---|---|---|---|---|---|---|---|
| * Beölungsmenge 1g/m² mit Fuchs Anticorit PL3802-39S | | | | | | | | | |

Der Vergleich der Klebemassen K1 mit K2 und K3 zeigt, dass verbesserte ungehärtete Klebemassen erhalten werden, wenn die verwendeten Epoxidharze hohe Viskositäten (> 20 Pa s) aufweisen (K2) oder feste Epoxidharze verwendet werden (K3). So steigt der KZTB von 30 °C auf 57 °C beziehungsweise 56 °C.

Die Klebemassen erhalten ihre haftklebrigen Eigenschaften durch die Zugabe geeigneter Reaktivharze. Werden bereits haftklebrige Polymere beziehungsweise Polymer-Klebharz Mischungen eingesetzt, wie dies in K4 der Fall ist, so sind die kohäsiven Eigenschaften im unausgehärteten Zustand verschlechtert. Dies manifestiert sich an einem niedrigen KZTB von lediglich 38 °C.

Für Anwendungen im Karosserierohbau müssen die Klebebänder auf öligen Substraten hohe Verklebungsfestigkeiten erzielen. Dies ist mit K5 herausragend demonstriert.

Die Klebemassen K1 bis K5 und K7,K8 werden beispielsweise bei 180 °C gehärtet. Bevor die Vernetzungsreaktion startet, durchlaufen diese Klebebänder eine sehr niedrigviskose Phase, wodurch nicht zusätzlich gehaltene Verbünde (zum Beispiel durch Klammern, Clinchen, Lötpunkte, Schweißpunkte) wieder auseinanderfallen. Dieser Nachteil kann umgangen werden, wenn die Klebemassen nach der Beschichtung im Klebeband vorvernetzen. Dies ist exemplarisch in K6 realisiert. Der KZTB erhöht sich auf 178 °C bei einer sehr hohen Verklebungsfestigkeit von 20 MPa.

Durch die Zugabe von rheologiemodifizierenden Stoffen wie beispielsweise Aerosil R202 verbessert ebenfalls den KZTB. Dies ist exemplarisch in Beispiel K8 aufgezeigt, bei der sich der KZTB auf 98 °C verbessert.

Bei Verwendung von Polyurethanen hat sich gezeigt, dass ein hoher Kristallinitätsanteil von Vorteil für die haftklebrigen Eigenschaften ist. Im Vergleich zu K3 (Schmelzenthalpie von 54,7 J/g) erhält man mit einem weniger kristallinen Polyurethan wie in K9 verwendet keine ausreichend kohäsiven Klebebänder, was sich im SAFT-Test zeigt. Hier versagen die Klebebänder bereits bei der Starttemperatur von 30 °C.

Wie die Klebkraftmesswerte zeigen, sind alle Beispiele Haftklebstoffe mit ausreichender Kohäsion. Die Werte liegen über 1 N/cm bei adhäsivem Versagen. Die dazu benötigte Kohäsion wird auf die kontinuierliche Polymerphase zurückgeführt, die im Rasterelektronenmikroskop (REM) zu erkennen ist.

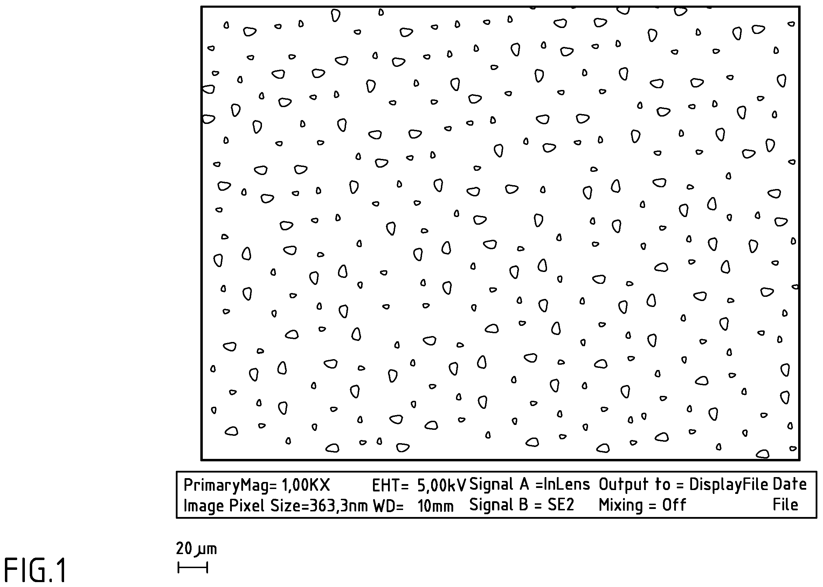

Figur 1 zeigt eine Aufnahme der Klebemasse von Beispiel K1 im ungehärteten Zustand. Der Nitril-Butadien Kautschuk wurde mit Osmiumtetroxid angefärbt. Es ist eine helle kontinuierliche Nitrilkautschukphase zu erkennen. Indirekt wird klar, dass diese zum Teil mit Epoxid gequollen vorliegt, da der Anteil der hellen Phase deutlich größer ist, als aus der Zusammensetzung (20 %) zu erwarten wäre.

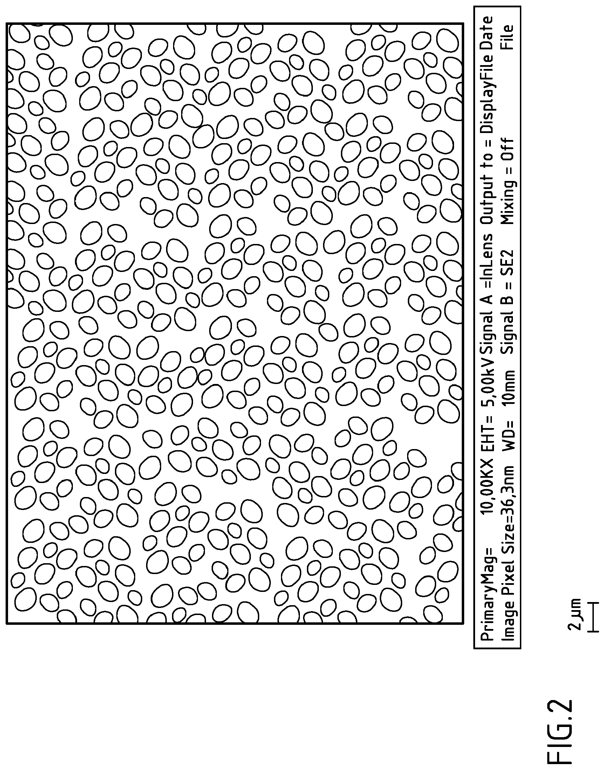

Figur 2 zeigt eine Aufnahme derselben Klebemasse nach 30 Minuten Härtung bei 180 °C. Die Phasenstruktur ist im ausgehärteten Zustand viel deutlicher zu erkennen. Ebenfalls ist erkennbar, dass die Polymerphase nach wie vor die kontinuierliche Phase bildet. Die hohe Klebfestigkeit lässt vermuten, dass auch in der Polymerphase Epoxid gelöst vorliegt und mit dem Epoxid der gelösten Epoxidphase vernetzt.

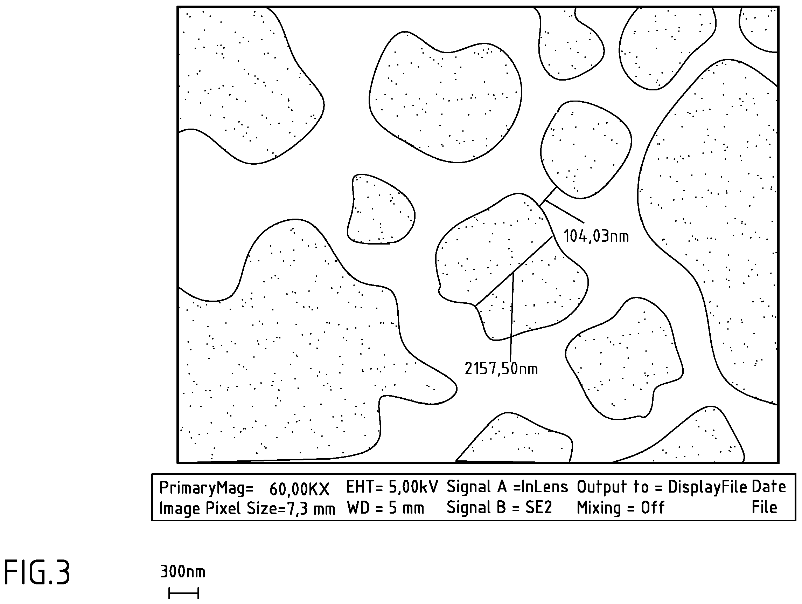

Figur 3 zeigt eine Aufnahme der Klebemasse von Beispiel K2 im ungehärteten Zustand. Auch in dieser Abmischung ist die kontinuierliche NBR-Phase (etwas hellere Phase) zu erkennen. Im Gegensatz zur Abmischung mit reinem Epoxid zeigen die dispersen Epoxidphasen auch hellere Punkte, da sich die Epoxidphase aus nitrilkautschukmodifizierten Epoxiden zusammensetzt, die ebenfalls angefärbt werden können.

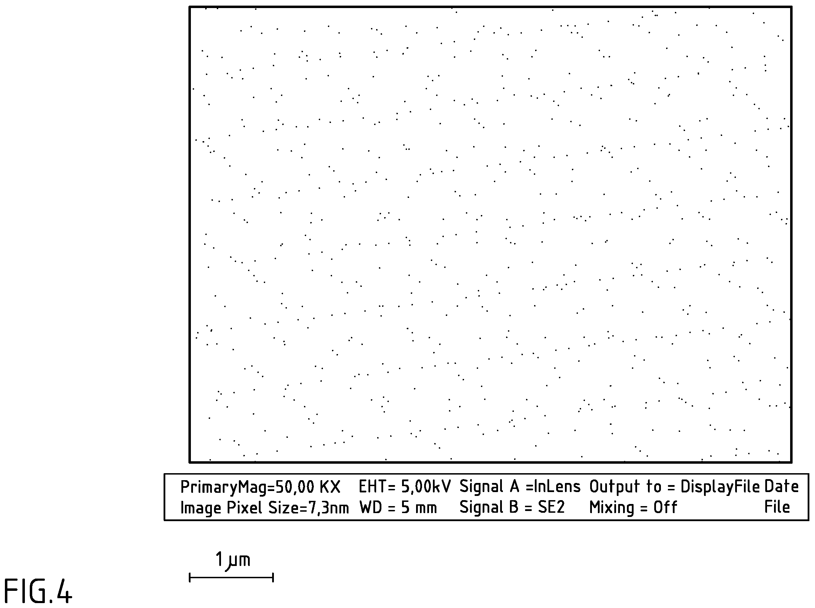

Figur 4 zeigt eine Aufnahme der Klebemasse von Beispiel K3 im gehärteten Zustand. Hier ist keine Phasenstruktur zu erkennen. Dies, die hohen Klebkräfte im unausgehärteten und gleichzeitig hohen Verklebungsfestigkeiten im gehärteten Zustand legt die Schlussfolgerung nahe, dass diese Systeme eine kontinuierliche Polymerphase besitzen (wegen der hohen Klebkräfte im unausgehärteten Zustand), in der die Epoxidkomponente gelöst vorliegt (was zu hohen Verklebungsfestigkeiten im gehärteten Zustand führt).

## Patentansprüche

1. Klebeband, enthaltend eine Klebemasse enthaltend
- mindestens ein Polymer
- optional ein Klebharz
- mindestens ein Reaktivharz, wobei die Klebemasse auf 100 Teile Polymer und Klebharz mindestens 104 Teile des mindestens einen Reaktivharzes enthält
- mindestens einen Initiator und/oder Härter und/oder Beschleuniger
**dadurch gekennzeichnet, dass**
die Klebemasse eine Haftklebemasse ist, wobei das mindestens eine Polymer im ungehärteten Zustand der Haftklebemasse als kontinuierliche Polymerphase vorliegt das Reaktivharz in der Polymerphase als gelöst und/oder dispergiert ist,
- das Reaktivharz ein Epoxidharz ist, wobei es ein Feststoff mit einer Erweichungstemperatur (gemessen nach der angegebenen Messmethode) von mindestens 45 °C ist oder eine Viskosität bei 25 °C von mindestens 20 Pa s, bevorzugt 50 Pa s, insbesondere mindestens 150 Pa s aufweist (gemessen nach der angegebenen Messmethode),
- und wobei das mindestens eine Polymer ein Thermoplast ist, ausgewählt ist aus der Gruppe der Polyurethane, **dadurch gekennzeichnet, dass** das Polyurethan teilkristallin ist und in der DSC-Messung einen Schmelz- oder Kristallisationspeak (gemessen nach der angegebenen Messmethode) aufweist, der einer Schmelzenthalpie von mindestens 25 J/g entspricht.

2. Klebeband nach Anspruch 1, **dadurch gekennzeichnet, dass** die Klebemasse auf 100 Teile Polymer mindestens 120 Teile Reaktivharz, bevorzugt mindestens 200 Teile Reaktivharz, insbesondere mindestens 300 Teile Reaktivharz enthält.

3. Klebeband nach Anspruch 1 oder 2, **dadurch gekennzeichnet, dass** als Reaktivharz mindestens ein Epoxidharz auf Basis von Bisphenol-A, Bisphenol-S, Bisphenol-F, einem Epoxy-Novolak, einem Epoxy-Kresol-Novolak oder einem epoxidierten Nitrilkautschuk enthalten ist.

4. Klebeband nach einem der Ansprüche 1 bis 3, **dadurch gekennzeichnet, dass** das mindestens eine Polymer zusammen mit dem optionalen Klebharz per se nicht haftklebrig ist.

5. Klebeband nach einem der Ansprüche 1 bis 4, **dadurch gekennzeichnet, dass** das mindestens eine Reaktivharz in der kontinuierlichen Polymerphase zumindest zum Teil, vorzugsweise vollständig, homogen gelöst vorliegt.

6. Klebeband nach einem der Ansprüche 1 bis 5, **dadurch gekennzeichnet, dass** die Kurzzeittemperaturbeständigkeit des unausgehärteten Klebebandes (gemessen nach der angegebenen Messmethode) größer als 35 °C, bevorzugt 45 °C, besonders bevorzugt größer 50 °C ist.

7. Klebeband nach einem der Ansprüche 1 bis 6, **dadurch gekennzeichnet, dass** das Epoxidharz im Durchschnitt mehr als zwei Epoxidgruppen pro Molekül aufweist.

8. Klebeband nach einem der Ansprüche 1 bis 7, **dadurch gekennzeichnet, dass** die Klebkraft der ungehärteten Haftklebemasse auf Stahl mindestens 1 N/cm beträgt (gemessen nach der angegebenen Messmethode).

9. Klebeband nach einem der Ansprüche 1 bis 7, **dadurch gekennzeichnet, dass** die Verklebungsfestigkeit, gemessen mit dynamischem Schertest, auf Stahl mindestens 5 MPa, bevorzugt 10 MPa, insbesondere größer 15 MPa beträgt (gemessen nach der angegebenen Messmethode).

10. Klebeband nach einem der Ansprüche 1 bis 9, wobei das Polymer ausgewählt ist aus der Gruppe der Polyurethane, **dadurch gekennzeichnet, dass** das Polyurethan in der DSC-Messung einen Schmelz- oder Kristallisationspeak aufweist, der einer Schmelzenthalpie von mindestens 40 J/g entspricht (gemessen nach der angegebenen Messmethode).

11. Klebeband nach einem der Ansprüche 1 bis 10, **dadurch gekennzeichnet, dass** das mindestens eine Polymer nach der Beschichtung und vor der Verwendung chemisch vernetzt wird.

12. Klebeband nach Anspruch 11, **dadurch gekennzeichnet, dass** die chemische Vernetzung strahleninduziert oder über die Zugabe eines Vernetzungsagens, insbesondere enthaltend mindestens zwei reaktive Gruppen, ausgewählt aus der Gruppe bestehend aus Isocyanaten, Alkoxysilanen und Alkylhalogeniden, optional unter Zugabe eines multifunktionellen Alkohols oder Amins mit einem Molgewicht < 10.000 g/mol, erfolgt.

13. Klebeband nach einem der Ansprüche 1 bis 12, **dadurch gekennzeichnet, dass** es trägerlos als Transferklebeband vorliegt.

14. Verwendung des Klebebandes nach einem der Ansprüche 1 bis 13_zum dauerhaften Fügen von zwei Substraten.

15. Verwendung des Klebebandes nach einem der Ansprüche 1 bis 13 zum Verkleben von geölten Substraten.

16. Verfahren zum Herstellen einer lösemittelbasierten Haftklebemasse für ein Klebeband nach einem der Ansprüche 1 bis 13, umfassend die Schritte
- Lösen des mindestens einen Polymers in einem nicht-wässrigen Lösungsmittel, bevorzugt bei erhöhter Temperatur;
- Zugabe des mindestens einen Reaktivharzes;
- Abkühlen auf Raumtemperatur;
- Zugabe des Härters und optional des Beschleunigers unter starker Scherung, um eine gute Dispergierung zu erreichen;
- Zugabe von optionalen Additiven, Rheologiemodifizierern, Schäumungsmitteln, Füllstoffen, Adhäsionsvermittlern.

17. Verfahren zum Herstellen einer lösemittelfreien Haftklebemasse für ein Klebeband nach einem der Ansprüche 1 bis 13, umfassend die Schritte
- Aufschmelzen des mindestens einen Polymers insbesondere in einem Extruder;
- Zudosierung des mindestens einen Reaktivharzes;
- Abkühlen der Schmelze auf unter 100 °C, insbesondere unter 80 °C;
- Zudosierung und Einmischen des Härters und optional des Beschleunigers;
- Extrusion dünner Schichten mit einer Stärke von 50 µm bis 3.000 µm, zum Beispielinsbesondere mittels Düse oder Kalanderwalzen.

## Claims

1. Adhesive tape containing an adhesive comprising
- at least one polymer
- optionally a tackifier resin
- at least one reactive resin, the adhesive comprising at least 104 parts of the at least one reactive resin per 100 parts of polymer and tackifier resin
- at least one initiator and/or curing agent and/or accelerator
**characterized in that**
the adhesive is a pressure sensitive adhesive, the at least one polymer being present as continuous polymer phase in the uncured state of the pressure sensitive adhesive,
the reactive resin being in solution and/or dispersion in the polymer phase,
- the reactive resin is an epoxy resin, being a solid having a softening temperature (measured according to the specified measurement method) of at least 45°C or having a viscosity of 25°C of at least 20 Pa s, preferably 50 Pa s, more particularly at least 150 Pa s (measured according to the specified measurement method)
- and wherein the at least one polymer is a thermoplastic selected from the group of the polyurethanes, **characterized in that** the polyurethane is semicrystalline and in the DSC measurement has a melting peak or crystallization peak (measured according to the specified measurement method) which corresponds to an enthalpy of fusion of at least 25 J/g.

2. Adhesive tape according to Claim 1, **characterized in that** the adhesive comprises at least 120 parts of reactive resin, preferably at least 200 parts of reactive resin, more particularly at least 300 parts of reactive resin per 100 parts of polymer.

3. Adhesive tape according to Claim 1 or 2, **characterized in that** at least one epoxy resin based on bisphenol A, bisphenol S, bisphenol F, an epoxy novolak, an epoxy-cresol novolak or an epoxidized nitrile rubber is present as reactive resin.

4. Adhesive tape according to any of Claims 1 to 3, **characterized in that** the at least one polymer together with the optional tackifier resin is per se not pressure-sensitively adhesive.

5. Adhesive tape according to any of Claims 1 to 4, **characterized in that** the at least one reactive resin is present at least partly, preferably completely, in homogeneous solution in the continuous polymer phase.

6. Adhesive tape according to any of Claims 1 to 5, **characterized in that** the short-term temperature resistance of the uncured adhesive tape (measured according to the specified measurement method) is greater than 35°C, preferably 45°C, more preferably greater than 50°C.

7. Adhesive tape according to any of Claims 1 to 6, **characterized in that** the epoxy resin has on average more than two epoxide groups per molecule.

8. Adhesive tape according to any of Claims 1 to 7, **characterized in that** the peel adhesion of the uncured pressure sensitive adhesive on steel is at 1 N/cm (measured according to the specified measurement method).

9. Adhesive tape according to any of Claims 1 to 7, **characterized in that** the bond strength, measured by dynamic shearing test, on steel is at least 5 MPa, preferably 10 MPa, more particularly greater than 15 MPa (measured according to the specified measurement method).

10. Adhesive tape according to any of Claims 1 to 9, the polymer being selected from the group of the polyurethanes, **characterized in that** the polyurethane in the DSC measurement has a melting peak or crystallization peak which corresponds to an enthalpy of fusion of at least 40 J/g (measured according to the specified measurement method).

11. Adhesive tape according to any of Claims 1 to 10, **characterized in that** the at least one polymer is chemically crosslinked after coating and before use.

12. Adhesive tape according to Claim 11, **characterized in that** chemical crosslinking takes place with radiation induction or via the addition of a crosslinking agent, more particularly containing at least two reactive groups, selected from the group consisting of isocyanates, alkoxysilanes and alkyl halides, optionally with addition of a polyfunctional alcohol or amine having a molar weight < 10,000 g/mol.

13. Adhesive tape according to any of Claims 1 to 12, **characterized in that** it is present without carrier as an adhesive transfer tape.

14. Use of the adhesive tape according to any of Claims 1 to 13 for the permanent joining of two substrates.

15. Use of the adhesive tape according to any of Claims 1 to 13 for the adhesive bonding of oiled substrates.

16. Method for producing a solvent-based pressure sensitive adhesive for an adhesive tape according to any of Claims 1 to 13, comprising the steps of
- dissolving the at least one polymer in a non-aqueous solvent, preferably at elevated temperature;
- adding the at least one reactive resin;
- cooling to room temperature;
- adding the curing agent and optionally the accelerator with strong shearing, in order to achieve effective dispersing;
- adding optional additives, rheology modifiers, foaming agents, fillers, adhesion promoters.

17. Method for producing a solvent-free pressure sensitive adhesive for an adhesive tape according to any of Claims 1 to 13, comprising the steps of
- melting the at least one polymer, in particular in an extruder;
- metering in the at least one reactive resin;
- cooling the melt to below 100°C, more particularly below 80°C;
- metering in and mixing in the curing agent and optionally the accelerator;
- extruding thin layers with a thickness of 50 µm to 3000 µm, for example in particular by means of nozzle or of calender rolls.

## Revendications

1. Bande adhésive, contenant une masse adhésive contenant :
- au moins un polymère,
- optionnellement une résine adhésive,
- au moins une résine réactive, la masse adhésive contenant pour 100 parties de polymère et de résine adhésive au moins 104 parties de ladite au moins une résine réactive,
- au moins un initiateur et/ou durcisseur et/ou accélérateur,
**caractérisée en ce que**
la masse adhésive est une masse adhésive sensible à la pression, ledit au moins un polymère se présentant à l'état non durci de la masse adhésive sensible à la pression sous la forme d'une phase polymère continue, la résine réactive étant dissoute et/ou dispersée dans la phase polymère,
- la résine réactive est une résine époxyde, celle-ci étant un solide ayant une température de ramollissement (mesurée selon la méthode de mesure indiquée) d'au moins 45 °C ou présentant une viscosité à 25 °C d'au moins 20 Pa s, de préférence 50 Pa s, notamment d'au moins 150 Pa s (mesurée selon la méthode de mesure indiquée),
- et ledit au moins un polymère étant un thermoplastique, étant choisi dans le groupe des polyuréthanes, **caractérisée en ce que** le polyuréthane est partiellement cristallin et présente dans la mesure DSC un pic de fusion ou de cristallisation (mesuré selon la méthode de mesure indiquée), qui correspond à une enthalpie de fusion d'au moins 25 J/g.

2. Bande adhésive selon la revendication 1, **caractérisée en ce que** la masse adhésive contient pour 100 parties de polymère au moins 120 parties de résine réactive, de préférence au moins 200 parties de résine réactive, notamment au moins 300 parties de résine réactive.

3. Bande adhésive selon la revendication 1 ou 2, **caractérisée en ce qu'**en tant que résine réactive, au moins une résine époxyde à base de bisphénol A, de bisphénol S, de bisphénol F, d'une époxy-novolaque, d'une époxy-crésol-novolaque ou d'un caoutchouc de nitrile époxydé est contenue.

4. Bande adhésive selon l'une quelconque des revendications 1 à 3, **caractérisée en ce que** ledit au moins un polymère conjointement avec la résine adhésive optionnelle n'est pas adhésif sensible à la pression en lui-même.

5. Bande adhésive selon l'une quelconque des revendications 1 à 4, **caractérisée en ce que** ladite au moins une résine réactive se présente sous forme dissoute de manière homogène au moins en partie, de préférence en totalité, dans la phase polymère continue.

6. Bande adhésive selon l'une quelconque des revendications 1 à 5, **caractérisée en ce que** la résistance à la température à court terme de la bande adhésive non durcie (mesurée selon la méthode de mesure indiquée) est supérieure à 35 °C, de préférence 45 °C, de manière particulièrement préférée supérieure à 50 °C.

7. Bande adhésive selon l'une quelconque des revendications 1 à 6, **caractérisée en ce que** la résine époxyde comprend en moyenne plus de deux groupes époxyde par molécule.

8. Bande adhésive selon l'une quelconque des revendications 1 à 7, **caractérisée en ce que** la force d'adhésion de la masse adhésive sensible à la pression non durcie sur de l'acier est d'au moins 1 N/cm (mesurée selon la méthode de mesure indiquée).

9. Bande adhésive selon l'une quelconque des revendications 1 à 7, **caractérisée en ce que** la résistance de collage, mesurée avec un essai de cisaillement dynamique, sur de l'acier est d'au moins 5 MPa, de préférence 10 MPa, notamment supérieure à 15 MPa (mesurée selon la méthode de mesure indiquée).

10. Bande adhésive selon l'une quelconque des revendications 1 à 9, dans laquelle le polymère est choisi dans le groupe des polyuréthanes, **caractérisée en ce que** le polyuréthane présente dans la mesure DSC un pic de fusion ou de cristallisation, qui correspond à une enthalpie de fusion d'au moins 40 J/g (mesuré selon la méthode de mesure indiquée).

11. Bande adhésive selon l'une quelconque des revendications 1 à 10, **caractérisée en ce que** ledit au moins un polymère est réticulé chimiquement après le revêtement et avant l'utilisation.

12. Bande adhésive selon la revendication 11, **caractérisée en ce que** la réticulation chimique a lieu induite par rayonnement ou par l'intermédiaire de l'ajout d'un agent de réticulation, notamment contenant au moins deux groupes réactifs, choisis dans le groupe constitué par les isocyanates, les alcoxysilanes et les halogénures d'alkyle, optionnellement avec ajout d'un alcool ou d'une amine multifonctionnel ayant un poids moléculaire < 10 000 g/mol.

13. Bande adhésive selon l'une quelconque des revendications 1 à 12, **caractérisée en ce qu'**elle se présente sans support sous la forme d'une bande adhésive de transfert.

14. Utilisation de la bande adhésive selon l'une quelconque des revendications 1 à 13 pour l'assemblage durable de deux substrats.

15. Utilisation de la bande adhésive selon l'une quelconque des revendications 1 à 13 pour le collage de substrats huilés.

16. Procédé de fabrication d'une masse adhésive sensible à la pression à base de solvant pour une bande adhésive selon l'une quelconque des revendications 1 à 13, comprenant les étapes suivantes :
- la dissolution dudit au moins un polymère dans un solvant non aqueux, de préférence à température élevée,
- l'ajout de ladite au moins une résine réactive ;
- le refroidissement à température ambiante ;
- l'ajout du durcisseur et optionnellement de l'accélérateur sous cisaillement fort, afin d'atteindre une bonne dispersion ;
- l'ajout d'additifs optionnels, de modificateurs de rhéologie, d'agents moussants, de charges, de promoteurs d'adhésion.

17. Procédé de fabrication d'une masse adhésive sensible à la pression sans solvant pour une bande adhésive selon l'une quelconque des revendications 1 à 13, comprenant les étapes suivantes :
- la fusion dudit au moins un polymère notamment dans une extrudeuse,
- l'addition de ladite au moins une résine réactive ;
- le refroidissement de la masse fondue à moins de 100 °C, notamment moins de 80 °C ;
- l'addition et l'incorporation du durcisseur et optionnellement de l'accélérateur ;
- l'extrusion de couches minces d'une épaisseur de 50 µm à 3 000 µm, par exemple notamment au moyen d'une buse ou de cylindres de calandrage.
